# EUROPÄISCHE PATENTANMELDUNG

(11) **EP 3 372 125 A1**
(43) Veröffentlichungstag der Anmeldung: **12.09.2018**
(21) Anmeldenummer: 18155661.4
(22) Anmeldetag: 08.02.2018
(51) Int. Cl.: A47J 31/44

(54) **GETRÄNKEAUTOMAT**

(30) Priorität: 10.03.2017 DE 102017105090
(71) Anmelder: Miele & Cie. KG, 33332 Gütersloh (DE)
(72) Erfinder: Jungclaus, Dirk, 59302 Oelde (DE); van Pels, Ulrich, 33378 Rheda-Wiedenbrück (DE); Wüstefeld, Michael, 59555 Lippstadt (DE)

(57) **Zusammenfassung**

Die Erfindung betrifft einen Getränkeautomaten (1) mit einem Gehäuse, das eine Oberseite (2) und mehrere Seitenwände (3, 4, 5, 6) aufweist und über einen mit dem Gehäuse verbundenen Boden (7) verfügt, wobei zur Abführung von Wärme und Feuchtigkeit oberseitig in dem Gehäuse Lüftungsschlitze (8) vorhanden sind und das Gehäuse zudem mindestens eine bis zum Boden (7) des Getränkeautomaten (1) reichende, im geschlossenen Zustand an einer korrespondierenden Anschlagfläche (9) des Getränkeautomaten (1) anliegende Tür (10) aufweist.

Erfindungsgemäß wird vorgeschlagen, dass die Innenseite (11) der Tür (10) und/oder die Anschlagfläche (9) bodenseitig einen Anschnitt (12) aufweist, durch den ein optisch durch die geschlossene Tür (10) verdeckter Lüftungsspalt zwischen Tür (10) und Anschlagfläche (9) gebildet ist, wobei zwischen dem Lüftungsspalt und den Lüftungsschlitzen (8) eine strömungsleitende Verbindung besteht.

## Beschreibung

Die Erfindung betrifft einen Getränkeautomaten, wie er insbesondere zur Zubereitung von Aufgussgetränken Verwendung findet. Der Getränkeautomat weist ein Gehäuse mit einer Oberseite und mehreren, als Seitenwände ausgeführten Verkleidungsteilen auf und ist mit einem Boden ausgestattet, wobei zur Abführung von Wärme und Feuchtigkeit oberseitig in dem Gehäuse Lüftungsschlitze vorhanden sind und das Gehäuse zudem mindestens eine bis zum Boden des Getränkeautomaten reichende, im geschlossenen Zustand an einer korrespondierenden Anschlagfläche des Getränkeautomaten anliegende Tür aufweist. Die erwähnte Anschlagfläche bildet beispielsweise einen Bestandteil eines Chassis, an dem auch die Seitenwände befestigt sind und das die für den Betrieb des Getränkeautomaten erforderlichen Aggregate aufnimmt.

Aus der EP 2 721 974 A1 ist ein derartiger Getränkeautomat bereits bekannt. Nach dem Offenbarungsgehalt dieser Druckschrift ist die Tür dabei als Servicetür ausgeführt und überdeckt den Boden des Getränkeautomaten zumindest teilweise.

Ein für den Einsatz eines Getränkeautomaten zur Zubereitung eines Aufgussgetränkes geeignetes, pflanzliches Produkt kann beispielsweise Kakao, Tee oder insbesondere Kaffee sein, wobei diese pflanzlichen Produkte in unterschiedlichen Darreichungsformen angeboten werden. So besteht Tee überwiegend aus getrockneten und teilweise geschnittenen Blättern, während Kakao zumeist eine Pulverform aufweist, was überwiegend auch für Kaffee zutrifft. Darüber hinaus wird, um beim Beispiel des Kaffees zu bleiben, dieser auch in Bohnenform angeboten, so dass vor der Zubereitung eines Aufgussgetränkes die Kaffeebohnen zunächst gemahlen werden. Da in den als Kaffeeautomaten ausgeführten Getränkeautomaten zumeist frische Kaffeebohnen verarbeitet werden, um einen bestmöglichen Geschmack zu erreichen, ist hier ein Mahlwerk vorhanden, das sich im Betriebszustand des Getränkeautomaten und in Fallrichtung der Bohnen betrachtet, unterhalb eines die Bohnen aufnehmenden Bohnenbehälters befindet. Die in dem Mahlwerk zu Kaffeepulver zermahlen Kaffeebohnen werden anschließend in einer dem Mahlwerk nachgeordneten Brüheinheit mit kochendem oder stark erhitztem Wasser aufgebrüht. Ähnlich ist die Vorgehensweise auch bei der Zubereitung von Tee oder Kakao oder anderen Aufgussgetränken, bei denen die jeweiligen pflanzlichen Produkte allerdings in der Regel ohne Zwischenschaltung des Mahlwerkes aufgebrüht werden. Abschließend erfolgt in jedem Fall die Abgabe des zubereiteten Getränks über wenigstens eine Ausgabeeinheit des Getränkeautomaten. Derartige Getränkeautomaten können sowohl als Einbaugerät in einen Schrank eingesetzt, als auch als freistehendes Einzelgerät ausgeführt sein.

Wie bereits ausgeführt wurde, wird während der Zubereitung eines Getränks mit einem Getränkeautomaten Wasser erhitzt, so dass Wärme und Wasserdampf entstehen. Bei vielen Ausführungen hat sich in nachteiliger Weise herausgestellt, dass es insbesondere durch die Temperaturdifferenz zwischen der in dem Getränkeautomaten erzeugten Wärme und der geringeren Umgebungstemperatur zu einer Kondensatsbildung kommt, die insbesondere an der Innenseite der Tür entsteht, was darauf zurückzuführen ist, dass sich hinter der Tür die Brüheinheit befindet und somit in diesem Bereich die höchsten Temperaturen gegeben sind. Die vorhandenen Lüftungsschlitze reichen dabei offenbar nicht aus, die Wärme und das Kondensat in zufriedenstellender Weise an die Umgebung abzuführen. Ist ein derartiger Getränkeautomat über einen längeren Zeitraum in Betrieb, so kann es sogar vorkommen, dass sich eine Tröpfchenbildung einstellt und die Feuchtigkeit aus dem Getränkeautomaten heraus tropft. Dies hat natürlich Nachteile und ist für den Anwender sehr unbefriedigend, so dass hier eine Abhilfe wünschenswert ist. Weitere, also zusätzliche Lüftungsschlitze in der Tür vorzusehen, als dies bisher der Fall ist, würde eine unerwünschte Reduzierung der Stabilität der Tür mit sich bringen und wäre darüber hinaus auch optisch wenig ansprechend.

Der Erfindung stellt sich somit das Problem, einen Getränkeautomaten bereitzustellen, der konstruktiv einfach gestaltet ist und eine Möglichkeit bietet, die Kondensatsbildung zu reduzieren oder eine verbesserte Abführung der vorhandenen Feuchtigkeit zu gewährleisten.

Erfindungsgemäß wird dieses Problem durch einen Getränkeautomaten mit den Merkmalen des Patentanspruchs 1 gelöst. Vorteilhafte Ausgestaltungen und Weiterbildungen der Erfindung ergeben sich aus den nachfolgenden Unteransprüchen.

Ein Getränkeautomat mit einem Gehäuse, das eine Oberseite und mehrere Seitenwände aufweist und über einen mit dem Gehäuse verbundenen Boden verfügt, wobei zur Abführung von Wärme und Feuchtigkeit oberseitig in dem Gehäuse Lüftungsschlitze vorhanden sind und das Gehäuse zudem mindestens eine bis zum Boden des Getränkeautomaten reichende, im geschlossenen Zustand an einer korrespondierenden Anschlagfläche des Getränkeautomaten anliegende Tür aufweist, wurde erfindungsgemäß dahingehend weitergebildet, dass die Innenseite der Tür und/oder die Anschlagfläche bodenseitig einen Anschnitt aufweist, durch den ein optisch durch die geschlossene Tür verdeckter Lüftungsspalt zwischen Tür und Anschlagfläche gebildet ist, wobei zwischen dem Lüftungsspalt und den Lüftungsschlitzen eine strömungsleitende Verbindung besteht.

Unter dem erfindungsgemäßen "Anschnitt" ist dabei eine Schräge, eine Phase oder eine gekrümmte Ausnehmung zu verstehen, die den zuvor erwähnten Lüftungsspalt bildet, sodass in diesem Bereich ein Abstand zwischen der Anschlagfläche und der Innenseite der Tür vorhanden ist. Durch seine Anordnung und Ausbildung unterscheidet sich der Anschnitt folglich von der ansonsten plan oder eben ausgeführten Anschlagfläche und der hierzu korrespondierenden Innenseite der Tür. Durch diese, mit einfachen Mitteln umsetzbare Maßnahme wird hinter der Tür eine strömungsleitende Verbindung geschaffen, die die Entstehung eines Kondensats weitestgehend vermeidet und entstandenes Kondensat wirksam abführt. Hierzu trägt auch die im Innenraum des Getränkeautomaten erzeugte Wärme bei, die beispielsweise von der Brüheinheit herrührt, weil die warme Luft aufgrund physikalischer Gesetzmäßigkeiten aufsteigt und damit im Bereich des unten eingebrachten Lüftungsspaltes eine Sogwirkung erzeugt, die frische Luft ansaugt und gleichzeitig die erwärmte Luft mit samt der Feuchtigkeit über die an der Oberseite vorhandenen Lüftungsschlitze abführt. Durch die durch die Tür optisch verdeckte Anordnung des Anschnitts und des Lüftungsspaltes ist dieser für den Anwender des Getränkeautomaten nicht sichtbar, was zusätzlich gestalterische Vorteile mit sich bringt. Insgesamt bezeihen sich alle Positions- und Richtungsangaben auf die betriebsgemäße Aufstellposition des Gerätes.

Gemäß einer ersten Ausgestaltung der Erfindung wird vorgeschlagen, dass die strömungsleitende Verbindung mindestens ein Strömungskanal ist oder wenigstens einen Strömungskanal bildet. Hierbei ist daran gedacht, den Strömungskanal durch die Tür optisch verdeckt entweder in die Anschlagfläche oder in die Innenseite der Tür zu integrieren. Zur Umsetzung dieser Maßnahme sind unterschiedliche Lösungsansätze denkbar. So kann sowohl die Anschlagfläche, als auch die Tür oder es können beide Elemente Ausnehmungen oder Ausbuchtungen zur Ausdehnung des Raumes aufweisen, um als Strömungskanal zu dienen.

Einfacher sind dabei Lösungen, nach denen zur Ausbildung der strömungsleitenden Verbindung in die Innenseite der Tür oder in die Anschlagfläche, sich über die gesamte Höhe der Tür durchgehend erstreckende Nuten eingebracht oder in der Innenseite der Tür oder in der Anschlagfläche dementsprechend geeignete Ausnehmungen oder Hohlräume vorhanden sind. Von maßgeblicher Bedeutung ist in jedem Fall, dass die strömungsleitende Verbindung zwischen dem Anschnitt und den Lüftungsschlitzen durchgehend gewährleistet ist, um eine ungehinderte Strömung zu ermöglichen. Dabei ist es nicht zwingend erforderlich, dass die Nuten oder Hohlräume einen vertikalen, geradlinigen Verlauf aufweisen. Vielmehr können diese Strömungskanäle auch wellenlinienartig oder schräg zur Vertikalen verlaufend ausgeführt sein.

Weist die Tür des Getränkeautomaten entlang ihrer Innenseite, in vertikaler Richtung durchgehend verlaufende Nuten oder Ausnehmungen oder Hohlräume auf, so ist es von besonderem Vorteil, wenn zwischen den Nuten, Ausnehmungen oder Hohlräumen Stege oder Rippen ausgebildet sind. Diese Stege oder Rippen dienen entsprechend einer Weiterbildung der Erfindung in vorteilhafter Weise der Versteifung der Tür, so dass dadurch ein zusätzlicher, positiver Effekt erreicht wird. Die vertikale Ausrichtung bildet hinsichtlich der Luftströmung kein Hindernis, sodass dadurch eine Mehrzahl von vertikalen Schächten bereitgestellt wird, die einen Kamineffekt und dadurch eine verbesserte Strömung der Luft bieten. Die beschriebenen Geometrien lassen sich in der Regel bereits bei der Herstellung der Tür ausbilden, da diese bevorzugt aus Kunststoff besteht.

Bei einem erfindungsgemäßen Getränkeautomaten ist es von besonderem Vorteil für die Ausbildung einer optimalen Strömung, wenn die Länge des Anschnitts der Breite der Tür entspricht.

Darüber hinaus sollte der Anschnitt bevorzugt einen Querschnitt im Bereich zwischen 5 und 45 cm² (Quadratzentimeter), bevorzugt 15 bis 30 cm² aufweisen, um eine Strömungsoptimierung zu erreichen.

Mit zunehmender Größe der Tür wird diese instabiler, so dass hier geeignete Gegenmaßnahmen getroffen werden müssen. Die zuvor bereits erwähnten Rippen oder Stege sind dabei ein Mittel zum Zweck. Gemäß einer Ausgestaltung der Erfindung wird darüber hinaus vorgeschlagen, dass die Unterseite der Tür zusätzlich eine Randverstärkung aufweist. Bei dieser Randverstärkung kann es sich beispielsweise um einen Randwulst oder eine andere, hierfür geeignete Geometrie handeln. Bevorzugt sollte sich die Randverstärkung über die gesamte Breite der Tür erstrecken oder zumindest an wesentlichen Abschnitten der Tür vorgesehen werden.

Wie dies eingangs bereits beschrieben wurde, ist für die Zubereitung von Aufgussgetränken in einem erfindungsgemäßen Getränkeautomaten eine Brüheinheit vorhanden, die sich bei bekannten Ausführungen unmittelbar hinter der um Gelenke schwenkbaren Tür befindet. Nach einem sehr vorteilhaften Vorschlag der Erfindung wird die Brüheinheit nunmehr in einer hierfür geeigneten Aussparung einer die Anschlagfläche der Tür aufweisenden Mulde des Getränkeautomaten angeordnet. Diese spezielle Art der Anordnung der Brüheinheit hat den Vorzug, dass die Brüheinheit einen vergrößerten Abstand zur Innenseite der Tür aufweist bzw. einen vordefinierten Abstand bereitstellt. Diese Lösung ist insbesondere von Vorteil, wenn die Tür aus Kunststoff hergestellt wird, weil damit Beschädigungen oder Verformungen derselben verhindert werden.

Bei der Tür des Getränkeautomaten handelt es sich um eine Servicetür, mit dahinter, also im Innenraum des Getränkeautomaten, angeordneten, eine Wartung und/oder Reinigung und/oder Reparatur erfordernden Aggregaten. Diese sind durch das Öffnen der Tür zugänglich, so dass die erforderlichen Reparaturen, Wartungsmaßnahmen oder eine eventuell notwendige Reinigung möglich sind. Durch das Schließen der Tür werden die erwähnten Aggregate optisch verdeckt und auch vor Verunreinigungen geschützt.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine perspektivische Außenansicht eines Getränkeautomaten am Beispiel eines freistehenden Einzelgerätes,
- Figur 2:: der Getränkeautomat aus Figur 1 in einer anderen, räumlichen Ansicht, mit entfernter Tür
- Figur 3:: der Getränkeautomat aus den Figuren 1 und 2, jedoch mit einer Tür,
- Figur 4:: auszugsweise eine Schnittdarstellung einer weiteren Ausführungsvariante eines Getränkeautomaten von seiner Frontseite her betrachtet
- und Figur 5:: der Vergrößerte Ausschnitt V aus Figur 4.

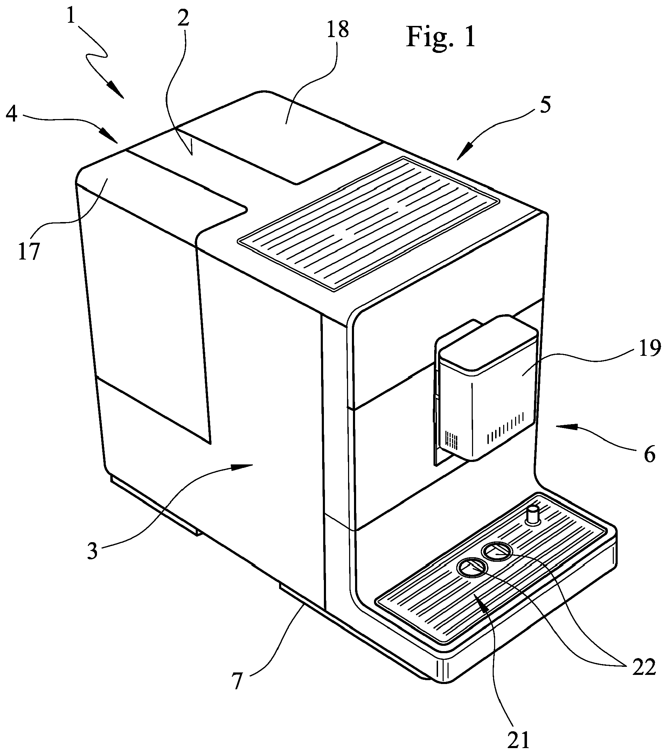

Die Figur 1 zeigt zunächst eine perspektivische Außenansicht eines Getränkeautomaten 1 am Beispiel eines Kaffeeautomaten, der hier als freistehendes Einzelgerät ausgeführt ist. Dieser Getränkeautomat 1 weist ein als Ganzes nicht näher bezeichnetes Gehäuse auf, in dem sämtliche für den Betrieb des Getränkeautomaten 1 erforderlichen Aggregate und Einrichtungen untergebracht sind. Das Gehäuse weist verschiedene, beispielsweise aus Kunststoff oder Edelstahl hergestellte Verkleidungselemente auf und besteht aus einer Oberseite 2, einer rückwärtigen Seitenwand 4, zwei einander gegenüberliegenden, seitlichen Seitenwänden 3 und 5 sowie einer frontseitigen Seitenwand 6. Die untere Begrenzung des Getränkeautomaten 1 wird durch einen Boden 7 gebildet. In der Seitenwand 5 ist bei dem dargestellten Ausführungsbeispiel eine Tür 10 vorhanden, die nachfolgend noch näher beschrieben wird. Im vorliegenden Fall befindet sich auf einer Seite des Gehäuses ein Wassertank 17, der abnehmbar ausgeführt ist, so dass auf einfache Weise das für die Zubereitung der Getränke erforderliche Wasser in den Wassertank 17 nachgefüllt werden kann. Der Wassertank 17 ist überwiegend in die Seitenwand 3 des Getränkeautomaten 1 eingefügt und passt sich optisch an die Oberfläche des Gehäuses an. Ein Blick auf die Oberseite 2 des Getränkeautomaten 1 zeigt, dass auf der dem Wassertank 17 gegenüberliegenden Seite ein durch einen Bohnenbehälterdeckel 18 abgedeckter Bohnenbehälter vorhanden ist. Die durch die Seitenwand 6 gebildete Frontseite des Getränkeautomaten 1 weist zudem eine in der Höhe verstellbar ausgeführte Ausgabeeinheit 19 auf, mit deren Hilfe die in dem Getränkeautomaten 1 hergestellten Getränke entnommen werden können. Hierfür sind an der Unterseite der Ausgabeeinheit 19 mehrere, in der Figur 1 nicht sichtbare Ausgabedüsen 20 angeordnet, über die die Abgabe der Getränke erfolgt. Unterhalb der Ausgabeeinheit 19 ist darüber hinaus eine Möglichkeit gegeben, ein Gefäß, also beispielsweise eine Tasse, abzustellen. Hierzu dient ein Abtropfblech 21, das mit einer Aussparung oder Öffnung 22 oder einer Vielzahl von Aussparungen 22 ausgestattet ist, um übergelaufene oder verspritzende Flüssigkeitsreste in einen unterhalb des Abtropfbleches 21 angeordneten Auffangbehälter abzuführen.

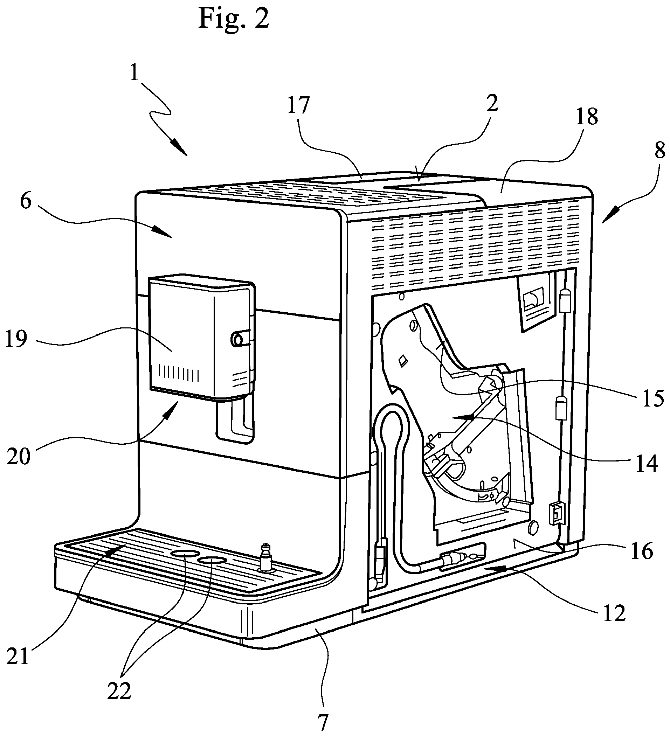

Der Getränkeautomat 1 aus Figur 1 wird in Figur 2 in einer anderen, räumlichen Ansicht, mit entfernter Tür 10 gezeigt. Die Tür 10 liegt an einer Anschlagfläche 9 an, die, bedingt durch die Darstellung, in der Figur 2 nicht detailliert erkennbar ist. Ersichtlich wird jedoch, dass oberseitig der Seitenwand 5 mehrere, parallel zueinander verlaufende Lüftungsschlitze 8 vorhanden sind, durch die Wärme und Feuchtigkeit aus dem Geräteinneren abgeführt werden können. Die hier entfernte Tür 10 verdeckt optisch eine Mulde 16, in die wiederum eine Aussparung 15 eingebracht ist, die zur Aufnahme der Brüheinheit 14 des Getränkeautomaten 1 dient. Durch das Einsetzen der Brüheinheit 14 in die Aussparung 15 kann ein unmittelbarer Kontakt zwischen der Innenseite der Tür 10 und der Brüheinheit 14 verhindert werden. Bodenseitig des Getränkeautomaten 1 ist ferner ein Anschnitt 12 vorhanden, der durch eine an der Anschlagfläche 9 ausgebildete und von dieser abgetragene Schrägfläche gebildet wird. Diese Schräge verläuft bei dieser Ausführung des Getränkeautomaten 1 von der Geräteinnenseite zur Geräteaußenseite abfallend.

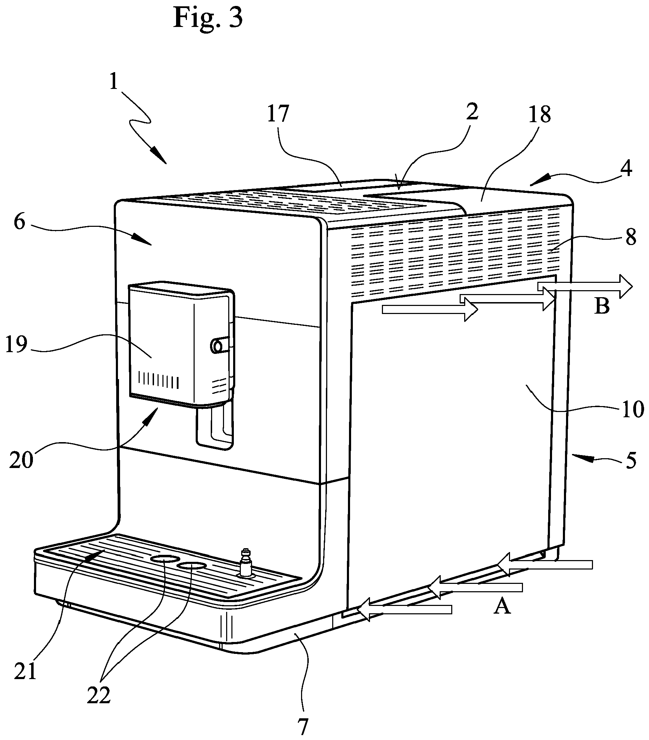

Die Figur 3 zeigt den Getränkeautomaten 1 aus Figur 2 noch einmal in der gleichen räumlichen Ansicht. Hierbei wurde jedoch die Tür 10 dargestellt, die einen wesentlichen Teil der Seitenwand 5 bildet. Die Tür 10 weist eine Größe auf, die sich fast über die gesamte Seitenwand 5 erstreckt und bis zum Boden 7 des Getränkeautomaten 1 reicht. Dabei verdeckt die Tür 10 bodenseitig den zuvor bereits angedeuteten Anschnitt 12. Da der Anschnitt 12 für einen Abstand zwischen der Innenseite 11 der Tür 10 und der korrespondierenden Anschlagfläche 9 des Getränkeautomaten 1 schafft, wird dadurch ein Lüftungsspalt geschaffen, über den in Richtung der Pfeile "A" Luft angesaugt wird und innerhalb eines in der Figur 3 nicht erkennbaren Strömungskanals 13 bis zu den Lüftungsschlitzen 8 geführt wird, wo die mit Feuchtigkeit und Wärme angereicherter Luft in Richtung der Pfeile "B" aus dem Getränkeautomaten 1 abgeführt wird.

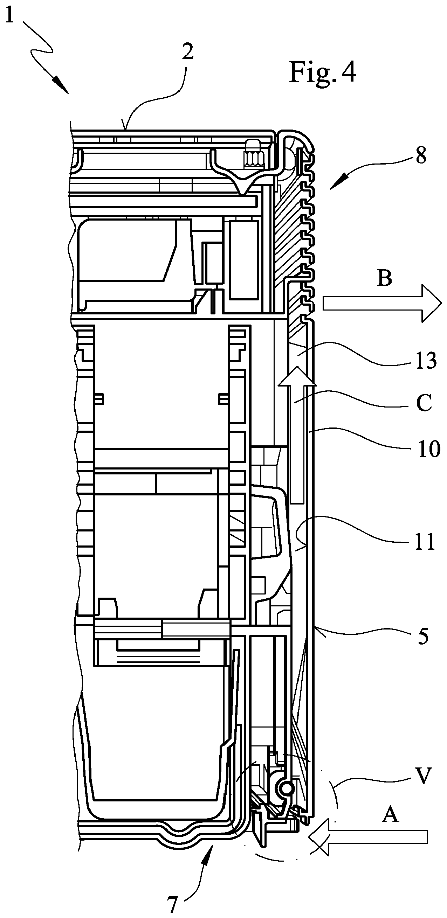

Aus der Figur 4 geht auszugsweise eine Schnittdarstellung einer weiteren Ausführung eines Getränkeautomaten 1, von seiner Frontseite her betrachtet, hervor. Die Seitenwand 5 wird dabei überwiegend durch die Tür 10 gebildet. An der Oberseite der Seitenwand 5 befinden sich die zuvor bereits beschriebenen Lüftungsschlitze 8. Wie aus der Figur 4 erkennbar wird, ist zwischen der Innenseite 11 der Tür 10 und der korrespondierenden Anschlagfläche 9 ein Strömungskanal 13 ausgebildet, der eine Luftströmung innerhalb des Getränkeautomaten 1 ermöglicht. Dabei tritt in der zuvor bereits beschriebenen Weise die Luft in Richtung des Pfeils "A" in den Lüftungsspalt ein, der durch den Anschnitt 12 bodenseitig des Getränkeautomaten 1 geschaffen wird. Im Anschluss daran strömt die Luft entlang des Strömungskanals 13, was durch einen weiteren Pfeil "C" symbolisiert wird, in Richtung der Lüftungsschlitze 8, wo die mit Feuchtigkeit und Wärme angereicherter Luft in Richtung des Pfeils "B" an die Umgebung abgegeben wird.

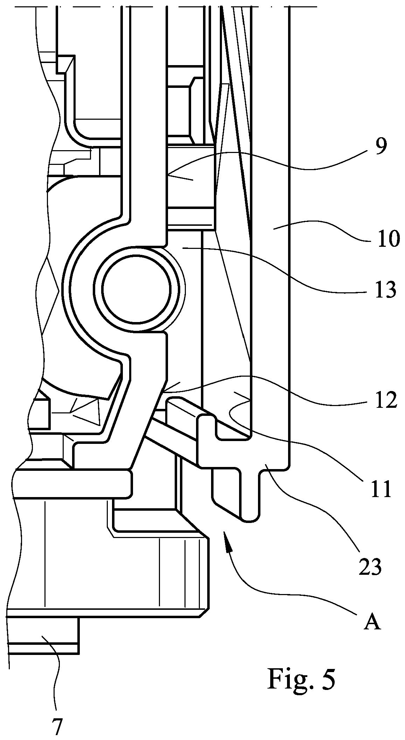

Die vergrößerte Einzelheit V aus Figur 4 ist Gegenstand der Darstellung in Figur 5. Daraus wird beispielhaft die Ausbildung des Anschnitts 12 deutlich, wie er bei dem Getränkeautomaten 1 in Figur 4 vorhanden ist. Bei dem gezeigten Ausführungsbeispiel weist die Mulde 16 des Getränkeautomaten 1 die zuvor bereits erwähnte Anschlagfläche 9 auf, die in ihrem unteren Bereich, also in der Nähe des Bodens 7, von einer ebenen Gestalt abweicht. Hierzu bildet die Anschlagfläche 9 einen von der Tür 10 weg weisenden Rücksprung, der im Sinne der Erfindung als Anschnitt 12 bezeichnet wird. Anders ausgedrückt handelt es sich hierbei um eine Materialaussparung, die einen Lüftungsspalt mit der gegenüberliegenden Innenseite 11 der Tür 10 bildet, wenn die Tür 10 geschlossen ist. Über den Lüftungsspalt kann in Richtung des Pfeils "A" Luft in den Strömungskanal 13 gelangen, die entlang der Innenseite 11 der Tür 10 bis zu den oberseitig des Getränkeautomaten 1 vorhandenen Lüftungsschlitzen 8 strömt. Der untere, bodenseitige Abschnitt der Tür 10 ist im vorliegenden Beispiel als Randverstärkung 23 ausgebildet, so dass die Tür 10 dadurch eine zusätzliche Versteifung erfährt. Die Randverstärkung 23 ist hierbei im Querschnitt etwa U-förmig ausgeführt.

### BEZUGSZEICHENLISTE:

- 1: Getränkeautomat
- 2: Oberseite
- 3: Seitenwand
- 4: Seitenwand
- 5: Seitenwand
- 6: Seitenwand
- 7: Boden
- 8: Lüftungsschlitze
- 9: Anschlagfläche
- 10: Tür
- 11: Innenseite (der Tür)
- 12: Anschnitt
- 13: Strömungskanal
- 14: Brüheinheit
- 15: Aussparung
- 16: Mulde
- 17: Wassertank
- 18: Bohnenbehälterdeckel
- 19: Ausgabeeinheit
- 20: Ausgabedüsen
- 21: Abtropfblech
- 22: Aussparung
- 23: Randverstärkung

## Patentansprüche

1. Getränkeautomat (1) mit einem Gehäuse, das eine Oberseite (2) und mehrere Seitenwände (3, 4, 5, 6) aufweist und über einen mit dem Gehäuse verbundenen Boden (7) verfügt, wobei zur Abführung von Wärme und Feuchtigkeit oberseitig in dem Gehäuse Lüftungsschlitze (8) vorhanden sind und das Gehäuse zudem mindestens eine bis zum Boden (7) des Getränkeautomaten (1) reichende, im geschlossenen Zustand an einer korrespondierenden Anschlagfläche (9) des Getränkeautomaten (1) anliegende Tür (10) aufweist,
**dadurch gekennzeichnet, dass**
die Innenseite (11) der Tür (10) und/oder die Anschlagfläche (9) bodenseitig einen Anschnitt (12) aufweist, durch den ein optisch durch die geschlossene Tür (10) verdeckter Lüftungsspalt zwischen Tür (10) und Anschlagfläche (9) gebildet ist, wobei zwischen dem Lüftungsspalt und den Lüftungsschlitzen (8) eine strömungsleitende Verbindung besteht.

2. Getränkeautomat nach Anspruch 1,
**dadurch gekennzeichnet, dass**
die strömungsleitende Verbindung mindestens ein Strömungskanal (13) ist oder einen Strömungskanal bildet.

3. Getränkeautomat nach einem der vorstehend genannten Ansprüche,
**dadurch gekennzeichnet, dass**
zur Ausbildung der strömungsleitenden Verbindung in die Innenseite (11) der Tür (10) oder in die Anschlagfläche (9), sich über die gesamte Höhe der Tür (10) durchgehend erstreckende Nuten eingebracht oder in der Innenseite (11) der Tür (10) oder in der Anschlagfläche (9) dementsprechend geeignete Ausnehmungen oder Hohlräume vorhanden sind.

4. Getränkeautomat nach einem der vorstehend genannten Ansprüche,
**dadurch gekennzeichnet, dass**
die Tür (10) entlang ihrer Innenseite (11) in vertikaler Richtung durchgehend verlaufende Nuten, Ausnehmungen oder Hohlräume aufweist, zwischen denen der Versteifung der Tür (10) dienende Stege oder Rippen ausgebildet sind.

5. Getränkeautomat nach einem der vorstehend genannten Ansprüche,
**dadurch gekennzeichnet, dass**
die Länge des Anschnitts (12) der Breite der Tür entspricht.

6. Getränkeautomat nach einem der vorstehend genannten Ansprüche,
**dadurch gekennzeichnet, dass**
der Anschnitt (12) einen Querschnitt zwischen 3 und 20 cm² (Quadratzentimeter) beträgt.

7. Getränkeautomat nach einem der vorstehend genannten Ansprüche,
**dadurch gekennzeichnet, dass**
die Unterseite der Tür (10) eine Randverstärkung (23) aufweist.

8. Getränkeautomat nach einem der vorstehend genannten Ansprüche,
**dadurch gekennzeichnet, dass**
hinter der Tür (10) eine für die Zubereitung von Aufgussgetränken erforderliche Brüheinheit (14) in einer hierfür geeigneten Aussparung (15) einer die Anschlagfläche (13) der Tür (10) aufweisenden Mulde (16) des Getränkeautomaten (1) angeordnet ist.

9. Getränkeautomat nach einem der vorstehend genannten Ansprüche,
**dadurch gekennzeichnet, dass**
die Tür (10) eine Servicetür mit dahinter, also im Innenraum des Getränkeautomaten (1) angeordneten, eine Wartung und/oder Reinigung und/oder Reparatur erfordernden Aggregaten ist.
